(19) Europäisches Patentamt
European Patent Office
Office européen des brevets

(11) **EP 3 282 578 A1**

(12) **EUROPEAN PATENT APPLICATION**
published in accordance with Art. 153(4) EPC

(43) Date of publication:
**14.02.2018 Bulletin 2018/07**

(21) Application number: **16807152.0**

(22) Date of filing: **03.02.2016**

(51) Int Cl.:
***H02S 50/00*** (2014.01)

(86) International application number:
**PCT/JP2016/053183**

(87) International publication number:
**WO 2016/199445 (15.12.2016 Gazette 2016/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **09.06.2015   JP 2015116961**

(71) Applicant: **Omron Corporation**
**Kyoto-shi, Kyoto 600-8530 (JP)**

(72) Inventors:
• **SANO, Akihiko**
  **Kyoto-shi**
  **Kyoto 600-8530 (JP)**
• **MORITA, Kosuke**
  **Kyoto-shi**
  **Kyoto 600-8530 (JP)**
• **MISUMI, Shuichi**
  **Kyoto-shi**
  **Kyoto 600-8530 (JP)**

(74) Representative: **Horn Kleimann Waitzhofer**
**Patentanwälte PartG mbB**
**Ganghoferstrasse 29a**
**80339 München (DE)**

(54) **METHOD AND DEVICE FOR TESTING PHOTOVOLTAIC GENERATION SYSTEM**

(57)     The present invention allows the use of low-cost switches. A ground fault detection apparatus (12) includes a PV current detection unit (34), a ground fault current detection circuit (33), an electric power delivery path switching switch (31) that switches the connection of a solar cell string (11) from a PCS (13) side to the ground fault current detection circuit (33), and a control unit (36) that, when the solar cell string (11) is in a switchable state, switches the electric power delivery path switching switch (31) to the ground fault current detection circuit (33) side.

**FIG. 1**

EP 3 282 578 A1

**Description**

TECHNICAL FIELD

The present invention relates to a solar power generation system inspection method and inspection apparatus for inspecting a plurality of solar cell strings included in a solar power generation system.

RELATED ART

A solar power generation system includes a plurality of solar cell strings, each solar cell string being composed of a plurality of solar cell modules that are connected in series. DC power generated by each solar cell string is converted to AC power by a power conditioner and supplied to a commercial power supply system.

In order to ensure safe and stable power supply, in a solar power generation system configured as described above, the solar cell strings are inspected. For example, Patent Document 1 discloses a ground fault detection apparatus that inspects a solar power generation system including a plurality of solar cell strings for the presence or absence of a ground fault in the solar cell strings. The ground fault detection apparatus is configured to perform inspection for the presence or absence of a ground fault in the solar cell strings by disengaging a solar cell string to be inspected from the solar power generation system, or in other words, electrically disconnecting the solar cell string from the power conditioner by a switch unit provided between the solar cell string and the power conditioner.

RELATED ART DOCUMENTS

PATENT DOCUMENTS

Patent Document 1: JP 2012-119382 A (published on June 21, 2012)

SUMMARY OF THE INVENTION

PROBLEM TO BE SOLVED BY THE INVENTION

In the ground fault detection apparatus disclosed in Patent Document 1, a large electric current flows through the switch unit that is provided between the solar cell string and the power conditioner while the solar cell string is in a normal power generating state and the power conditioner is operating. Accordingly, as the switch unit, it is necessary to use a switch that can withstand large electric currents.

However, a large-electric current interruption apparatus is expensive, which leads to the problem of an increase in the cost of the solar power generation system. This problem is not unique to ground fault inspection apparatuses, and is common to other inspection apparatuses configured to perform inspection by disconnecting a solar cell string in a normal power generating state from the power conditioner.

Accordingly, it is an object of the present invention to provide a solar power generation system inspection method and inspection apparatus with a low-cost configuration in which a low-cost switch can be used as a switch for disconnecting a solar cell string from the power conditioner.

MEANS FOR SOLVING THE PROBLEMS

In order to solve the problems described above, a solar power generation system inspection apparatus according to the present invention is a solar power generation system inspection apparatus that inspects a plurality of solar cell strings that are connected to a power conversion apparatus, the solar power generation system inspection apparatus including: voltage measurement units that measure output voltages of the solar cell strings; an inspection unit that inspects the solar cell strings; a first switching unit that is provided for each of the solar cell strings and switches a connection of the solar cell string between the power conversion apparatus side and the inspection unit side; a determination unit that determines that a solar cell string is in a switchable state if at least a condition that the output voltage of the solar cell string is less than or equal to a first threshold value is satisfied; and a control unit that performs control so as to switch the first switching units to the inspection unit side if it is determined that the solar cell string is in the switchable state.

EFFECTS OF THE INVENTION

According to the configuration of the present invention, a miniaturized and inexpensive switch with small power resistance (for example, a relay) can be used as the first switching unit, and thus the inspection apparatus can have a miniaturized and low-cost configuration.

BRIEF DESCRIPTION OF THE DRAWINGS

Fig. 1    is a circuit diagram showing a configuration of a solar power generation system that includes an inspection apparatus according to an embodiment of the present invention.

Fig. 2    is a flowchart illustrating operations performed by a ground fault detection apparatus shown in Fig. 1.

Fig. 3    is a graph showing variations in voltage and the amount of power generated by a solar cell string included in an ordinary solar power generation system and measurement timing.

Fig. 4    is a circuit diagram of the solar power generation system shown in Fig. 1 showing a state in which an inter-electrode voltage Va-Vb is obtained.

Fig. 5    is a circuit diagram of the solar power generation system shown in Fig. 1 showing a state in which a first voltage is obtained.

Fig. 6    is a circuit diagram of the solar power generation system shown in Fig. 1 showing a state in which a second voltage is obtained.

Fig. 7    is a circuit diagram of the solar power generation system shown in Fig. 1 showing a state in which a solar cell string to be inspected has been switched.

EMDODIMENTS OF THE INVENTION

Configuration of Solar Power Generation System

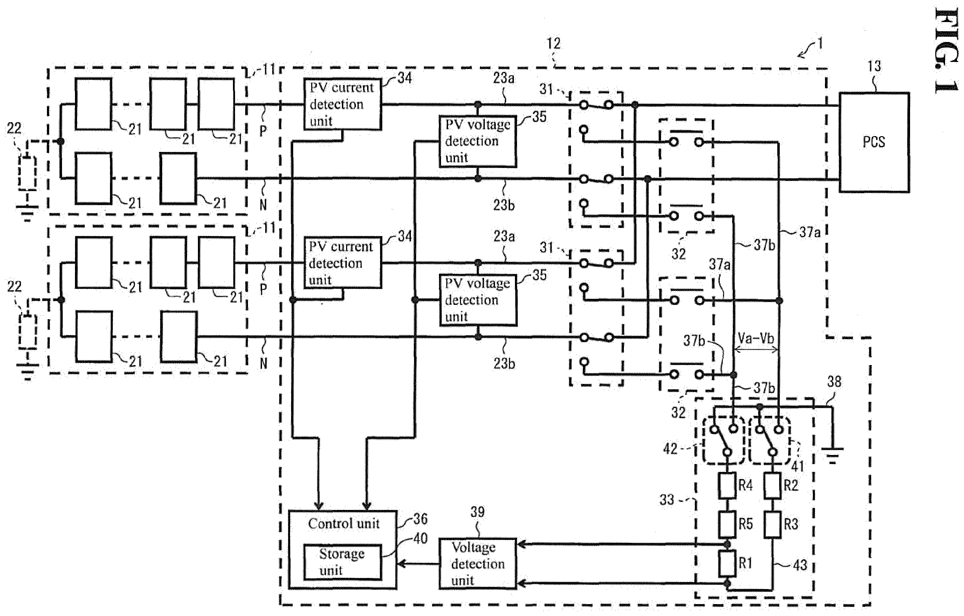

An embodiment of the present invention will be described with reference to the drawings. Fig. 1 is a circuit diagram showing a configuration of a solar power generation system that includes an inspection apparatus according to the present embodiment.

As shown in Fig. 1, a solar power generation system 1 includes a plurality of solar cell strings 11, a ground fault detection apparatus (inspection apparatus) 12, and a power conditioning system (hereinafter referred to as PCS) 13 that serves as a power conversion apparatus. Here, Fig. 1 shows a state (power output state) in which the power generated by the solar cell strings 11 is supplied to the PCS 13 and the ground fault detection apparatus 12 is not running.

Solar Cell String 11

Each solar cell string 11 is composed of a plurality of, for example, ten to twenty solar cell modules 21 that are connected in series. Each solar cell module 21 includes a plurality of solar cells (not shown) that are connected in series, and is formed as a panel. Ground fault resistors 22 are resistors that are each provided between a power delivery path of a solar cell string 11 and the ground. Each solar cell string 11 is connected to the PCS 13 via a pair of electric power delivery paths 23a and 23b. A pair of electric power delivery paths 23a and 23b is provided for each solar cell string 11.

Ground Fault Detection Apparatus 12

The ground fault detection apparatus 12 obtains the value of insulation resistance between a solar cell string 11 and the grounding point, and determines that a ground fault has occurred if the obtained insulation resistance value is smaller than a reference resistance value.

Accordingly, the ground fault detection apparatus 12 includes electric power delivery path switching switches (first switching units) 31, PV switching switches (second switching units) 32, a ground fault current detection circuit (inspection unit) 33, PV current detection units (current measurement units) 34, PV voltage detection units (voltage measurement units) 35, a control unit (determination unit) 36, first and second inspection power delivery paths (power delivery paths) 37a and 37b, a grounding power delivery path 38, and a voltage detection unit 39.

An electric power delivery path switching switch 31 is provided to the electric power delivery paths 23a and 23b that are provided corresponding to each solar cell string 11, and switches the connection of the solar cell string 11 between the PCS 13 side and the ground fault current detection circuit 33 side. Specifically, the connection of the electric power delivery paths 23a and 23b that are power output lines from the solar cell string 11 is switched between the PCS 13 side and the first and second inspection power delivery paths 37a and 37b side.

A pair of first and second inspection power delivery paths 37a and 37b are provided corresponding to each solar cell string 11, and connect the electric power delivery path switching switch 31 of the solar cell string 11 and the ground fault current detection circuit 33.

A PV switching switch 32 is provided to each pair of first and second inspection power delivery paths 37a and 37b that are provided corresponding to each solar cell string 11, and opens and closes the first and second inspection power delivery paths 37a and 37b.

The ground fault current detection circuit 33 detects a ground fault current that is generated if a ground fault has occurred in a solar cell string 11. To this end, the ground fault current detection circuit 33 includes a first inspection switching switch 41, a second inspection switching switch 42, a third inspection power delivery path 43, a detection resistor R1, and voltage dividing resistors R2 to R5 that are protection resistors.

The first inspection switching switch 41 is connected to one end portion of the third inspection power delivery path 43, and switches the connection of the one end portion of the third inspection power delivery path 43 between the first inspection power delivery path 37a that is connected to the first inspection switching switch 41 and the grounding power delivery path 38 that is grounded. The second inspection switching switch 42 is connected to the other end portion of the third inspection power delivery path 43, and switches the connection of the other end portion of the third inspection power delivery path 43 between the second inspection power delivery path 37b that is connected to the first inspection switching switch 41 and the grounding power delivery path 38 that is grounded.

In the third inspection power delivery path 43, the detection resistor R1 and the voltage dividing resistors R2 to R5 are provided in series. The voltage dividing resistors R2 and R3 are provided between the detection resistor R1 and the first inspection switching switch 41, and the voltage dividing resistors R4 and R5 are provided between the detection resistor R1 and the second inspection switching switch 42. Voltages at both ends of the detection resistor R1 are input to the control unit 36 via the voltage detection unit 39. In the example shown in Fig. 1, four voltage dividing resistors are provided, but there may be two voltage dividing resistors. However, the risk of an accident caused by a short circuit fault can be reduced by using many voltage dividing resistors.

The voltage dividing resistors R2 to R5 reduce first and second voltages V1 and V2 generated at both ends of the detection resistor R1 so as to lower the voltage input to the control unit 36. This enables the control unit 36 to be configured using a microcomputer, and the ground fault detection apparatus 12 to be miniaturized. Also, the voltage dividing resistors R2 to R5 are present in a circuit for obtaining the inter-electrode voltage Va-Vb, a circuit for obtaining the first voltage V1, and a circuit for obtaining the second voltage V2.

A PV current detection unit 34 is provided to, for example, the electric power delivery path 23a that is provided corresponding to each solar cell string 11, and detects the amount of electric current flowing through the electric power delivery path 23a, or in other words, the amount of electric current that flows from the solar cell string 11 to the PCS 13, and outputs the result of detection to the control unit 36.

A PV voltage detection unit 35 detects the inter-electrode voltage Va-Vb (the voltage between P terminal and N terminal) of the corresponding solar cell string 11, and outputs the result of detection to the control unit 36.

The voltage detection unit 39 detects the voltages at both ends of the detection resistor R1 provided in the ground fault current detection circuit 33, and outputs the result of detection to the control unit 36.

The control unit 36 monitors the generated electric current of each solar cell string 11 detected by the PV current detection unit 34 and the generated voltage (inter-electrode voltage Va-Vb) of the solar cell string 11 detected by the PV voltage detection unit 35, and determines whether the solar cell string 11 is in a switchable state. Also, the control unit 36 controls switching operations of the electric power delivery path switching switches 31, the PV switching switches 32, the first inspection switching switch 41, and the second inspection switching switch 42, and identifies a ground fault resistance and the location of the ground fault if a ground fault has occurred in the solar cell string 11.

The control unit 36 includes a storage unit 40 that stores various types of information such as the result of a detection as to whether a ground fault has occurred in a solar cell string 11 and the location of the ground fault.

In the present invention, a ground fault detection apparatus is used as an example of the inspection unit, but it is also possible to use a failure detection apparatus that detects a failure other than a ground fault in a solar cell without any problem. An example of a failure other than a ground fault can be the interruption of a conductive path.

Overall Operations of Ground Fault Detection Apparatus

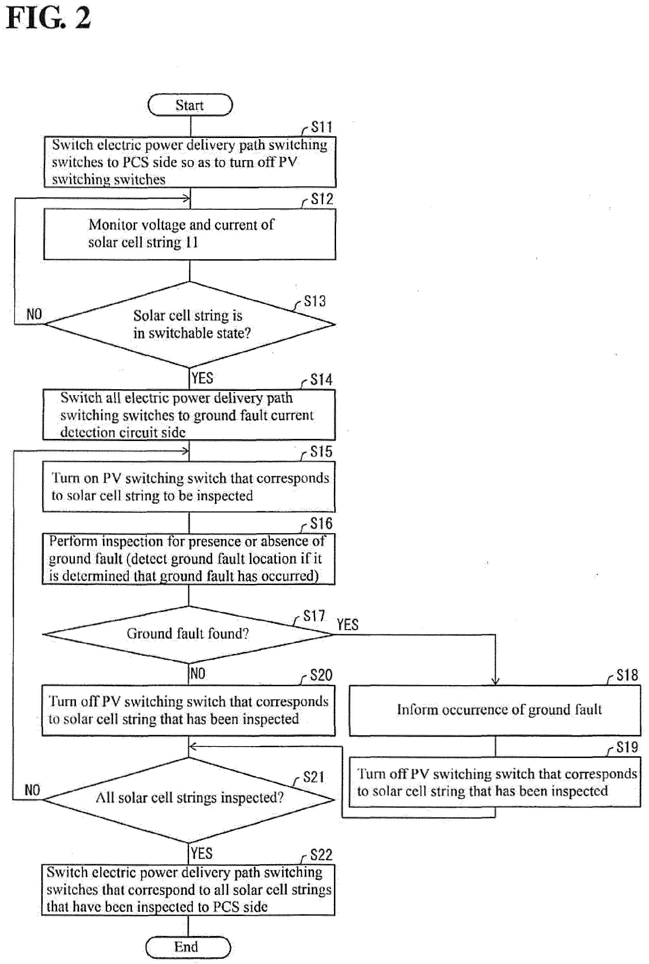

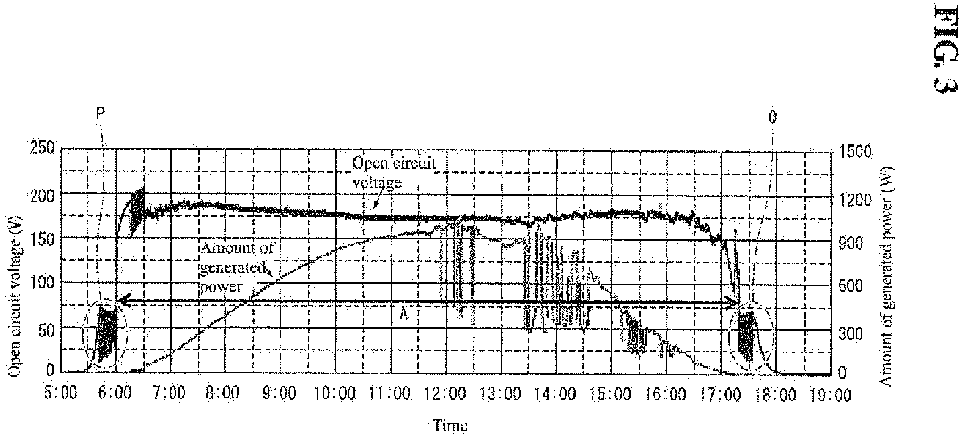

In the configuration described above, operations performed by the ground fault detection apparatus 12 will be described below. Fig. 2 is a flowchart illustrating operations performed by the ground fault detection apparatus 12. Fig. 3 is a graph that shows variations in the open circuit voltage and the amount of power generated by a solar cell string 11 on the day when the solar power generation system 1 was inspected by the ground fault detection apparatus 12.

The ground fault detection apparatus 12 performs inspection for the presence or absence of a ground fault in the solar cell strings 11 when the solar cell strings 11 are in a switchable state. As used herein, "switchable state" refers to, specifically, as shown in Fig. 3, a state in which the amount of power generated by (the output current of) a solar cell string 11 is sufficiently small (for example, a state in which the output current of a solar cell string 11 is about the same as the standby current of the PCS 13 or a state in which the output current of a solar cell string 11 is lower than the standby current of the PCS 13), the state corresponding to an area indicated by P. Alternatively, "switchable state" refers to a state in which the amount of generated power (output current) is sufficiently small (for example, a state in which the output current of a solar cell string 11 is about the same as the standby current of the PCS 13 or a state in which the output current of a solar cell string 11 is lower than the standby current of the PCS 13) while the output voltage (open circuit voltage) of the solar cell string 11 is falling, the state corresponding to an area indicated by Q. The area P occurs in the early morning, and the area Q occurs in the early evening. Range A indicates the running time of the PCS 13.

The switchable state may further include a condition that the output voltage (open circuit voltage) of the solar cell string 11 is greater than zero. It is thereby possible to perform inspection using the electric current generated by the solar cell string 11.

Accordingly, the switchable state described above satisfies at least a condition that the output voltage of a solar cell string 11 is less than or equal to a first threshold value (for example, less than or equal to an upper limit value of a defined output voltage when the solar cell string 11 is in a normal power generating state). The switchable state described above may further include a condition that the output voltage of the solar cell string 11 is greater than zero. The first threshold value may be set to, for example, 1/2 of the average value of the output voltage of the solar cell string 11 while the PCS 13 is running. Also, the switchable state described above may be a state in which, for example, the value of the output voltage of the solar cell string 11 is greater than zero and less than or equal to a threshold value set to a value that is less than the average value of output voltage during the running time of the PCS 13.

Also, the switchable state described above may include a condition that the output current of the solar cell string 11 is less than or equal to a second threshold value that indicates the solar cell string 11 is in a normal state so as to exclude a state in which the output current of the solar cell string is increasing abnormally due to some kind of failure from the switchable state. Also, the switchable state described above may satisfy a condition that the value of output current of the solar cell string 11 is less than or equal to a threshold value that is set to a value that is less than the average value of output current during the running time of the PCS 13. The second threshold value may be set to, for example, 1/2 of the average value of the output current of the solar cell string 11 while the PCS 13 is running.

As shown in Fig. 1, when the solar power generation system 1 is in a normal operating state, the electric power delivery path switching switches 31 respectively corresponding to the solar cell strings 11 are switched to the PCS 13 side, and thus the PV switching switches 32 are off (S11).

The control unit 36 included in the ground fault detection apparatus 12 monitors the output voltage and output current of a solar cell string 11 based on the results of detection by the PV current detection unit 34 and the PV voltage detection unit 35 (S12), and determines whether the solar cell string 11 is in a switchable state (S13).

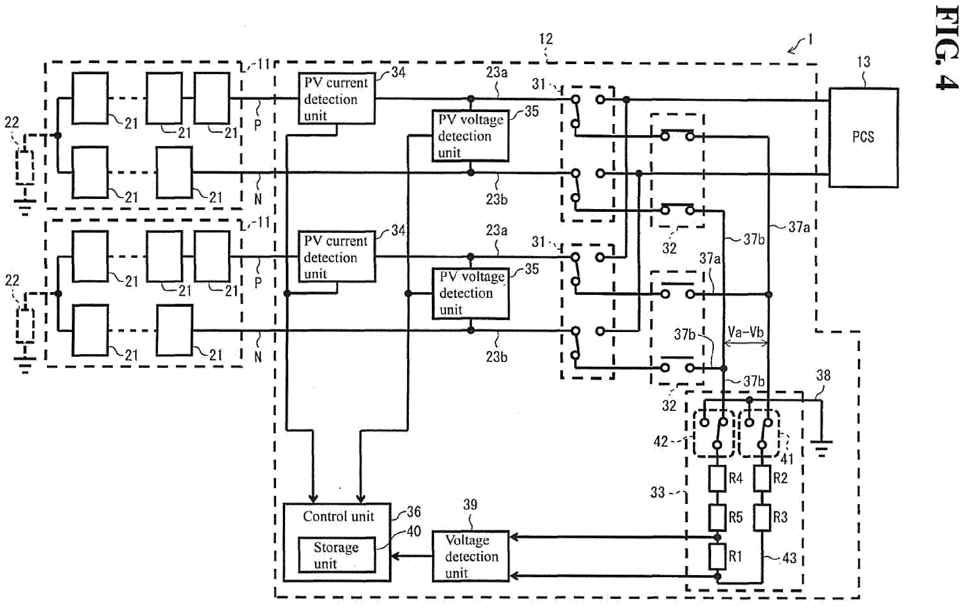

As a result of the determination in S13, if it is determined that the solar cell string 11 is in a switchable state, as shown in Fig. 4, the control unit 36 switches all of the electric power delivery path switching switches 31 from the PCS 13 side to the ground fault current detection circuit 33 side (S14). In response to the operation of switching the electric power delivery path switching switches 31, the connections of all of the solar cell strings 11 to the PCS 13 are cut off.

The control unit 36 performs the above-described control on the electric power delivery path switching switches 31 when, for example, at least one solar cell string 11 is in a switchable state. That is, the solar cell strings 11 may be brought into a switchable state at slightly different timings due to slight differences in the installation angle of the solar cell modules, installation position, and the like. It should be noted that the output current of the solar cell string 11 rises after the output voltage rises.

Next, the control unit 36 turns on a PV switching switch 32 that corresponds to the solar cell string 11 to be inspected (S15, see Fig. 4). In response thereto, the solar cell string 11 that corresponds to the PV switching switch 32 that has been turned on is connected to the ground fault current detection circuit 33 via the first and second inspection power delivery paths 37a and 37b, and the solar cell string 11 is inspected for the presence or absence of a ground fault.

In a state in which the solar cell string 11 is connected to the ground fault current detection circuit 33, the output current of the solar cell string 11 is limited by the ground fault current detection circuit 33, and thus the operation of turning on or off the PV switching switch 32 can be easily performed.

Note that in S15, the solar cell string 11 to be inspected is one of the solar cell strings 11 that were selected in a predetermined order. The predetermined order may be, for example, the order in which the solar cell strings 11 are to be brought into a switchable state.

Next, inspection for the presence or absence of a ground fault is performed on the solar cell string 11 to be inspected, and if it is determined that a ground fault has occurred, the location of the ground fault is detected (S16).

A configuration is also possible in which the control unit 36 determines that the solar cell string 11 is in an inspection ready state if a condition that the output voltage of the solar cell string 11 is greater than zero is satisfied, and turns on the PV switching switch 32 that corresponds to the solar cell string 11 to be inspected, and the ground fault current detection circuit 33 inspects the solar cell string 11 to be inspected for the presence or absence of a ground fault.

As a result of the inspection performed in S16, if it is determined that a ground fault has occurred in the inspected solar cell string 11 (S17), the control unit 36 informs a management apparatus (not shown) of the solar power generation system 1 of the fact that a ground fault has occurred in the inspected solar cell string 11 and the location of the ground fault (S18). The information including the presence or absence of a ground fault and the location of the ground fault is stored in the storage unit 40.

Also, the control unit 36 turns off the PV switching switch 32 that corresponds to the solar cell string 11 that has been inspected (S19), and the processing advances to the operation in S21.

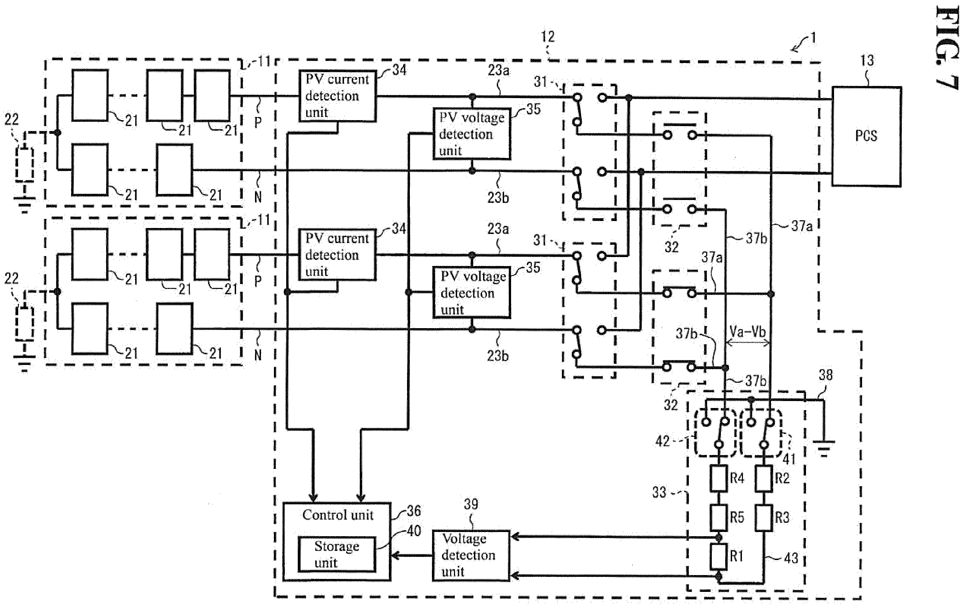

Next, the control unit 36 determines whether inspection has been performed on all of the solar cell strings 11 (S21). If it is determined that inspection has been performed on all of the solar cell strings 11, the control unit 36 performs the operation in S22. If, on the other hand, it is determined that inspection has not been performed on all of the solar cell strings 11, the processing returns to S15, and the operations in S15 and subsequent steps are repeated. That is, as shown in Fig. 7, the control unit 36 turns on the PV switching switch 32 that corresponds to the next solar cell string 11 to be inspected. After that, the solar cell string 11 is inspected for the presence or absence of a ground fault in the same manner.

After that, when the control unit 36 confirms, in S21, that inspection has been performed on all of the solar cell strings 11, the control unit 36 switches the electric power delivery path switching switches 31 that correspond to all of the solar cell strings 11 that have been inspected to the PCS 13 side (S22), and ends the processing. Through this, all of the solar cell strings 11 that have undergone ground fault inspection are connected to the PCS 13.

When an electric power delivery path switching switch 31 is switched from the ground fault current detection circuit 33 side to the PCS 13 side, the electric current is limited by the ground fault current detection circuit 33, and thus the switching operation can be easily performed without generating an arc.

Also, in the operations described above, each solar cell string 11 that has undergone ground fault inspection is connected to the PCS 13 irrespective of the result of inspection (the presence or absence of a ground fault) (S21) so as to supply power from the solar cell string 11 that has undergone ground fault inspection to the PCS 13. With this configuration, even if there is a minor failure (that needs to be mended but is not urgent) in the inspected solar cell string 11, the power generation function of the solar cell string 11 can be effectively used. However, instead of the operations described above, a configuration is also possible in which only solar cell strings 11 that were determined as having no anomaly (no ground fault) as a result of ground fault inspection are connected to the PCS 13.

Operations for Measuring Ground Fault Resistance

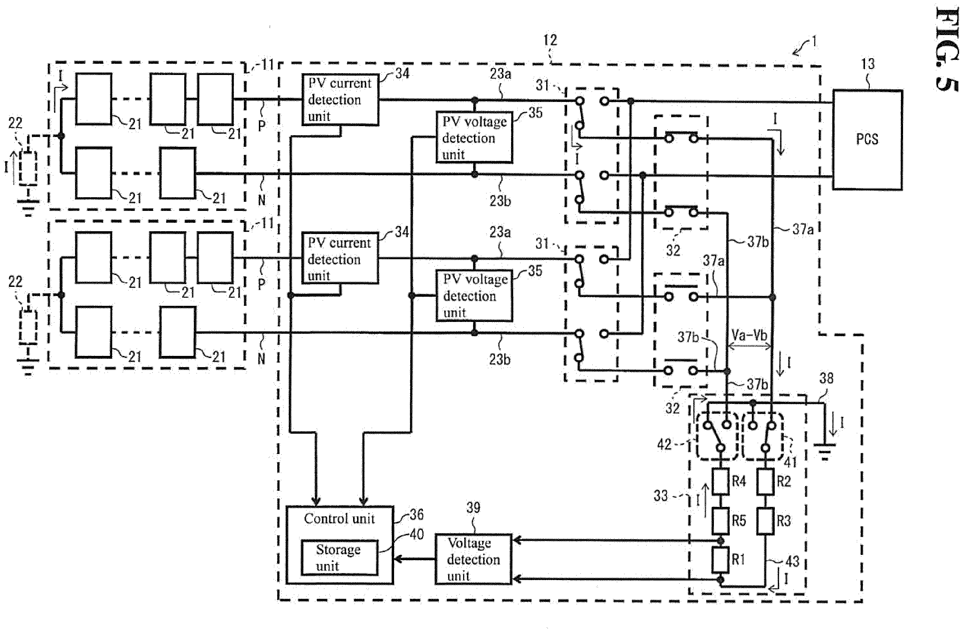

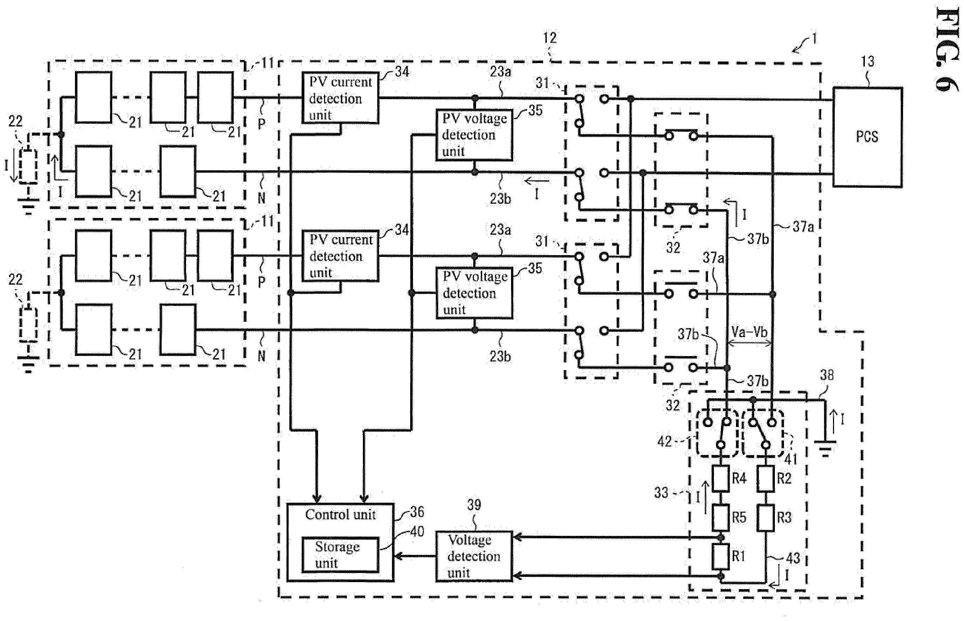

Fig. 4 is a circuit diagram of the solar power generation system 1 shown in Fig. 1 in a state in which the inter-electrode voltage Va-Vb is obtained. Fig. 5 is a circuit diagram of the solar power generation system 1 shown in Fig. 1 in a state in which the first voltage V1 is obtained. Fig. 6 is a circuit diagram of the solar power generation system 1 shown in Fig. 1 in a state in which the second voltage V2 is obtained.

In the case of obtaining the inter-electrode voltage Va-Vb, as shown in Fig. 4, the control unit 36 switches the first inspection switching switch 41 such that one end portion of the third inspection power delivery path 43 is connected to the first inspection power delivery path 37a, and switches the second inspection switching switch 42 such that the other end portion of the third inspection power delivery path 43 is connected to the second inspection power delivery path 37b.

In this state, the positive and negative electrodes of the solar cell string 11 are connected to each other via the detection resistor R1 and the voltage dividing resistors R2 to R5. In response thereto, at both ends of the detection resistor R1, a voltage is generated that corresponds to the resistance value of the detection resistor R1 when the voltage across the positive and negative electrodes of the solar cell string 11 is divided by the detection resistor R1 and the voltage dividing resistors R2 to R5. The voltage is input to the control unit 36 via the voltage detection unit 39, and the control unit 36 obtains the inter-electrode voltage Va-Vb.

Next, in the case of obtaining the first voltage V1, as shown in Fig. 5, the control unit 36 switches the first inspection switching switch 41 such that one end portion of the third inspection power delivery path 43 is connected to the first inspection power delivery path 37a, and switches the second inspection switching switch 42 such that the other end portion of the third inspection power delivery path 43 is connected to the grounding power delivery path 38.

In this state, the positive electrode (P terminal) of the solar cell string 11 is grounded via the detection resistor R1 and the voltage dividing resistors R2 to R5. In response thereto, at both ends of the detection resistor R1, a first voltage V1 is generated that corresponds to the resistance value of the detection resistor R1 when the voltage across the positive electrode of the solar cell string 11 and the ground potential is divided by the detection resistor R1 and the voltage dividing resistors R2 to R5. The first voltage V1 is input to the control unit 36 via the voltage detection unit 39, and the control unit 36 obtains the first voltage V1.

Next, in the case of obtaining the second voltage V2, as shown in Fig. 6, the control unit 36 switches the first inspection switching switch 41 such that one end portion of the third inspection power delivery path 43 is connected to the grounding power delivery path 38, and switches the second inspection switching switch 42 such that the other end portion of the third inspection power delivery path 43 is connected to the second inspection power delivery path 37b.

In this state, the negative electrode (N terminal) of the solar cell string 11 is grounded via the detection resistor R1 and the voltage dividing resistors R2 to R5. In response thereto, at both ends of the detection resistor R1, a second voltage V2 is generated that corresponds to the detection resistor R1 when the voltage across the negative electrode of the solar cell string 11 and the ground potential is divided by the detection resistor R1 and the voltage dividing resistors R2 to R5. The second voltage V2 is input to the control unit 36 via the voltage detection unit 39, and the control unit 36 obtains the second voltage V2. Here, there is no particular limitation on the order in which the inter-electrode voltage Va-Vb, the first voltage V1, and the second voltage V2 are obtained.

Next, the control unit 36 obtains a resistance value Rleake from the inter-electrode voltage Va-Vb and the first and second voltages V1 and V2 that were obtained above, as well as a total resistance value Rsum (= R1 + R2 + R3 + R4 + R5) of the third inspection power delivery path 43 by using the following expression:

$$\text{Rleake} = \text{Rsum} \times |\text{Va-Vb}| \div |\text{V1-V2}| - \text{Rsum} \quad \ldots\ldots(1).$$

The control unit 36 compares the resistance value Rleake (insulation resistance) with a reference resistance value (threshold value), and determines that a ground fault has occurred if the resistance value Rleake is smaller than the reference resistance value.

Operations for Detecting Location of Ground Fault

The control unit 36 determines the location of where a ground fault occurred (ground fault location) based on a ratio of the absolute value of the first voltage V1 and the absolute value of the second voltage V2. It is assumed here that, as an example, the solar cell string 11 includes five solar cell modules 21 that are connected in series, and a ground fault has occurred between the third solar cell module 21 and the fourth solar cell module 21 as viewed from the P terminal side of the solar cell string 11. Reference numeral 22 indicates the ground fault resistor of the ground fault location. In this case, the ratio between the absolute value of the first voltage V1 and the absolute value of the second voltage V2 is as follows:

$$|V1| : |V2| = 3:2,$$

based on which the ground fault location can be obtained.

Advantages of Ground Fault Detection Apparatus 12

As described above, the ground fault detection apparatus 12 is configured to, when a solar cell string 11 is in a switchable state, simultaneously switch all of the electric power delivery path switching switches 31 from, for example, the PCS 13 side to the ground fault current detection circuit 33 side, and thereafter, inspection is sequentially performed on each solar cell string 11 as to whether or not a ground fault has occurred. The switchable state satisfies at least a condition that the output voltage of the solar cell string 11 is less than or equal to a first threshold value (for example, less than or equal to an upper limit value of a defined output voltage when the solar cell string 11 is in a normal power generating state). Alternatively, the switchable state satisfies a condition that the value of output voltage of the solar cell string 11 is greater than zero and is less than or equal to a first threshold value that is set to a value that is less than the average value of output voltage during the running time of the PCS 13. Furthermore, the switchable state satisfies a condition that the output current of the solar cell string 11 is less than or equal to a second threshold value that indicates the solar cell string is in a normal state. Alternatively, the switchable state satisfies a condition that the value of the output current of the solar cell string 11 is less than or equal to a second threshold value that is set to a value that is less than the average value of output current during the running time of the PCS 13.

Accordingly, as the electric power delivery path switching switches 31 in the ground fault detection apparatus 12, it is possible to use miniaturized and inexpensive relays with small power resistance, and thus the ground fault detection apparatus 12 can have a miniaturized and low-cost configuration.

Also, in the case of a configuration in which the ground fault current detection circuit 33 sequentially inspects a plurality of solar cell strings 11, a situation may arise in which a long time is needed to complete inspection of all solar cell strings 11, during which the amount of sunlight increases, and the output voltage and output current of the solar cell strings 11 increase above the switchable state. However, even if such a situation arises, the electric power delivery path switching switches 31 have already been switched from the PCS 13 side to the ground fault current detection circuit 33 side, and it is therefore possible to easily perform inspection without being affected by such changes in the solar cell strings 11.

In the present embodiment, it is determined that a solar cell string 11 is in a switchable state if at least the condition that the output voltage of the solar cell string 11 is less than or equal to the first threshold value is satisfied. Also, it is determined that the solar cell string 11 is in a switchable state if the condition that the output voltage of the solar cell string 11 is less than or equal to the second threshold value is satisfied. Also, it is determined that the solar cell string 11 is in an inspection ready state if the condition that the output voltage of the solar cell string 11 is greater than zero is satisfied. By setting the inspection ready state as described above, a state in which the output current of the solar cell string 11 is increasing abnormally due to some kind of failure can be excluded from the inspection ready state, and the safety of the ground fault detection apparatus 12 can be enhanced.

Other Configuration Examples of Inspection Apparatus

In the embodiment described above, the solar power generation system 1 is configured to include the ground fault detection apparatus 12 as an example of the inspection apparatus. However, the inspection apparatus is not limited to an apparatus that detects a ground fault in a solar cell string 11, and may be an apparatus that detects a line interruption in a solar cell string 11 by using a conventionally known configuration. That is, the inspection apparatus included in the solar power generation system 1 may be an inspection apparatus that disconnects a solar cell string 11 from the PCS 13 and performs inspection when the solar cell string 11 is in a switchable state, such as, for example, a ground fault inspection apparatus or a line interruption inspection apparatus for solar cell strings 11.

Also, in the present embodiment, an example was described in which the solar cell strings 11 have an equal output voltage. However, for example, a so-called multi-string PCS may be used in which a booster is provided for each solar cell string 11. In this case, the output voltage varies from solar cell string 11 to solar cell string 11, and thus the timing of switching solar cell strings 11 may be determined based on a reference string, which is determined by extracting and selecting from past measurement history, as the reference string, a solar cell string 11 whose voltage increases earliest in the early morning.

Also, the configuration of the ground fault detection apparatus 12 is not limited to that shown in the embodiment above that includes the ground fault current detection circuit 33, and the ground fault detection apparatus 12 may detect a ground fault by using a conventionally known configuration.

Also, the ground fault detection apparatus 12 may include, as auxiliary means for detecting the switchable state, a solarimeter that measures the amount of sunlight on the solar cell strings 11, a clock that detects early morning and early evening, and the like.

Summary

A solar power generation system inspection apparatus according to the present invention is a solar power generation system inspection apparatus that inspects a plurality of solar cell strings that are connected to a power conversion apparatus, the solar power generation system inspection apparatus including: voltage measurement units that measure output voltages of the solar cell strings; an inspection unit that inspects the solar cell strings; a first switching unit that is provided for each of the solar cell strings and switches a connection of the solar cell string between the power conversion apparatus side and the inspection unit side; a determination unit that determines that a solar cell string is in a switchable state if at least a condition that the output voltage of the solar cell string is less than or equal to a first threshold value is satisfied; and a control unit that performs control so as to switch the first switching units to the inspection unit side if it is determined that the solar cell string is in the switchable state.

With the configuration described above, the voltage measurement unit measures the output voltage of the solar cell string, and the determination unit determines that the solar cell string is in a switchable state if at least a condition that the output voltage of the solar cell string is less than or equal to the first threshold value (for example, in early morning or early evening) is satisfied. If the solar cell string is in the switchable state, the control unit performs control so as to switch the first switching units to the inspection unit side. Through this, the inspection unit can inspect each solar cell string.

As described above, when a solar cell string is in the switchable state, the first switching units provided for each solar cell string, for example, simultaneously switch the solar cell strings from the power conversion apparatus side to the inspection unit side. Accordingly, as the first switching units, miniaturized and inexpensive switches with small power resistance (for example, relays) can be used, and thus the inspection apparatus can have a miniaturized and low-cost configuration.

Also, in the case where the inspection unit sequentially inspects a plurality of solar cell strings that are in a switchable state, for example, early in the morning, a situation may arise in which if it takes a long time to complete inspection of all solar cell strings, the amount of sunlight increases, and the output voltage and output current of the solar cell strings increase. In this case, an electric current flows from the solar cell string that is connected to the power conversion apparatus to the power conversion apparatus, as a result of operations of the power conversion apparatus.

If the first switching unit is a miniaturized switch, it is difficult for the first switching unit to switch the solar cell string from the power conversion apparatus side to the inspection unit side.

However, according to the configuration of the present invention, even if the amount of sunlight increases, and the output voltage and output current of the solar cell strings increase, the first switching units have already switched the solar cell strings from the power conversion apparatus side to the inspection unit side. Accordingly, inspection can be performed easily without being affected by such changes of the solar cell strings as described above. That is, the output current of the solar cell string is controlled to a micro current by the inspection unit, and thus inspection can be performed easily without being affected by changes of the solar cell strings.

The solar power generation system inspection apparatus described above may be configured such that the determination unit further determines that the solar cell string is in an inspection ready state if a condition that the output voltage of the solar cell string is greater than zero is satisfied.

With the configuration described above, the solar cell string is switched from the power conversion apparatus side to the inspection unit side while the solar cell string is in a power generation state or a substantially power generation state, and thus the inspection of the solar cell string can be performed by the inspection unit.

In the inspection apparatus, the operation of switching the connections of the solar cell strings from the power conversion apparatus side to the inspection unit side (switchable state) by the first switching units is limited based on the upper limit voltage of a predetermined voltage range, and the operation of carrying out inspection performed by the inspection unit (inspection ready state) is limited based on the lower limit voltage of the predetermined voltage range.

The solar power generation system inspection apparatus described above may further include current measurement units that measure output currents of the solar cell strings, and the determination unit may be configured to further determine that the solar cell string is in the switchable state if a condition that the output current of the solar cell string is less than or equal to a second threshold value is satisfied.

With the configuration described above, the determination unit further determines that the solar cell string is in the switchable state if the output current of the solar cell string is less than or equal to the second threshold value (for example, less than or equal to the upper limit value of an output current that indicates that the solar cell string is in a normal state).

If the solar cell string is in a normal state, in conformity with the PV panel characteristics, the solar cell string is in a low voltage/low current state, but if there is an anomaly (for example, string short circuit), a large current may flow despite the fact that the voltage is low. With the configuration described above, a state in which the output current of the solar cell string is increasing abnormally due to some kind of failure can be excluded from the switchable state, and the safety of the detection apparatus can be enhanced.

The solar power generation system inspection apparatus described above may be configured such that the inspection unit sequentially inspects the solar cell strings, and the control unit controls the first switching units so as to connect the solar cell strings that have been inspected by the inspection unit to the power conversion apparatus.

With the configuration described above, because an inspected solar cell string is connected to the power conversion apparatus, even if there is a minor failure (that needs to be mended but is not urgent) in the inspected solar cell string, the power generation function of the solar cell string can be effectively used.

The solar power generation system inspection apparatus described above may further include second switching units that each open and close a power delivery path between the first switching unit and the inspection unit, and the control unit may be configured to control the second switching units so as to sequentially connect each of the solar cell strings to be inspected to the inspection unit and at the same time disconnect each of the solar cell strings that have been inspected from the inspection unit.

With the configuration described above, each solar cell string to be inspected is sequentially connected to the inspection unit, and at the same time, each solar cell string that has been inspected is disconnected from the inspection unit. Accordingly, the inspection unit can appropriately inspect each solar cell string in sequence.

A solar power generation system inspection method according to the present invention is a solar power generation system inspection method for inspecting a plurality of solar cell strings that are connected to a power conversion apparatus, the method including the steps of: inspecting the solar cell strings; determining that a solar cell string is in a switchable state if at least a condition that an output voltage of the solar cell string is less than or equal to a first threshold value is satisfied; and if it is determined in the determining step that the solar cell string is in the switchable state, switching connections of the solar cell strings from the power conversion apparatus side to the inspection unit side.

With the configuration described above, it is possible to produce the same advantages effects as those of the solar power generation system inspection apparatus described above.

The present invention is not limited to the embodiments described above, and various modifications can be made within the scope recited in the appended claims. Embodiments obtained by combining technical means disclosed in different embodiments as appropriate also fall within the technical scope of the present invention.

INDUSTRIAL APPLICABILITY

The present invention is applicable to an apparatus that performs inspection for a ground fault, a line interruption or the like on a plurality of solar cell strings included in a solar power generation system.

INDEX TO THE REFERENCE NUMERALS

| | |
|---|---|
| 1 | Solar power generation system |
| 11 | Solar cell string |
| 12 | Ground fault detection apparatus (inspection apparatus) |
| 13 | Power conditioning system (power conversion apparatus) |
| 21 | Solar cell module |
| 22 | Ground fault resistor |
| 23a, 23b | Electric power delivery path |
| 31 | Electric power delivery path switching switch (first switching unit) |
| 32 | PV switching switch (second switching unit) |
| 33 | Ground fault current detection circuit (inspection unit) |
| 34 | PV current detection unit (current measurement unit) |
| 35 | PV voltage detection unit (voltage measurement unit) |
| 36 | Control unit (determination unit) |
| 37a, 37b | First and second inspection power delivery path (power delivery path) |

**Claims**

1. A solar power generation system inspection apparatus that inspects a plurality of solar cell strings that are connected to a power conversion apparatus, the solar power generation system inspection apparatus comprising:

   voltage measurement units that measure output voltages of the solar cell strings;
   an inspection unit that inspects the solar cell strings;
   a first switching unit that is provided for each of the solar cell strings and switches a connection of the solar cell string between the power conversion apparatus side and the inspection unit side;
   a determination unit that determines that a solar cell string is in a switchable state if at least a condition that the output voltage of the solar cell string is less than or equal to a first threshold value is satisfied; and
   a control unit that performs control so as to switch the first switching units to the inspection unit side if it is determined that the solar cell string is in the switchable state.

2. The solar power generation system inspection apparatus according to claim 1,
   wherein the determination unit further determines that the solar cell string is in an inspection ready state if a condition that the output voltage of the solar cell string is greater than zero is satisfied.

3. The solar power generation system inspection apparatus according to claim 1 or 2, further comprising
   current measurement units that measure output currents of the solar cell strings,
   wherein the determination unit further determines that the solar cell string is in the switchable state if a condition that the output current of the solar cell string is less than or equal to a second threshold value is satisfied.

4. The solar power generation system inspection apparatus according to any one of claims 1 to 3,
   wherein the inspection unit sequentially inspects the solar cell strings, and
   the control unit controls the first switching units so as to connect the solar cell strings that have been inspected by the inspection unit to the power conversion apparatus.

5. The solar power generation system inspection apparatus according to any one of claims 1 to 4, further comprising
   second switching units that each open and close a power delivery path between the first switching unit and the inspection unit,
   wherein the control unit controls the second switching units so as to sequentially connect each of the solar cell strings to be inspected to the inspection unit and at the same time disconnect each of the solar cell strings that have been inspected from the inspection unit.

6. A solar power generation system inspection method for inspecting a plurality of solar cell strings that are connected to a power conversion apparatus, the method comprising the steps of:

inspecting the solar cell strings;

determining that a solar cell string is in a switchable state if at least a condition that an output voltage of the solar cell string is less than or equal to a first threshold value is satisfied; and

if it is determined in the determining step that the solar cell string is in the switchable state, switching connections of the solar cell strings from the power conversion apparatus side to the inspection unit side.

FIG. 1

EP 3 282 578 A1

12

1

13

11

PV current detection unit 34

PV voltage detection unit 35

23a

31

23b

22

21 21 21 21 21 21 21

P

N

32

37b 37a

PCS

11

PV current detection unit 34

PV voltage detection unit 35

23a

31

23b

22

21 21 21 21 21 21

P

N

37a

37b

Va-Vb

32

37b

38

42

41

R4 R2

R5 R3

33

Control unit 36

Storage unit 40

39

Voltage detection unit

R1

43

# FIG. 2

```
                    ( Start )
                                          ┌S11
    ┌─────────────────────────────────────────┐
    │ Switch electric power delivery path switching │
    │ switches to PCS side so as to turn off PV      │
    │ switching switches                              │
    └─────────────────────────────────────────┘
                                          ┌S12
    ┌─────────────────────────────────────┐
    │      Monitor voltage and current of  │
    │           solar cell string 11       │
    └─────────────────────────────────────┘

                                    ┌S13
   NO        ╱  Solar cell string is  ╲
   ◄─────────   in switchable state?   
              ╲                       ╱
                    │ YES          ┌S14
    ┌─────────────────────────────────────┐
    │  Switch all electric power delivery path │
    │  switching switches to ground fault current│
    │  detection circuit side                  │
    └─────────────────────────────────────┘
                                          ┌S15
    ┌─────────────────────────────────────┐
    │ Turn on PV switching switch that corresponds │
    │ to solar cell string to be inspected         │
    └─────────────────────────────────────┘
                                          ┌S16
    ┌─────────────────────────────────────┐
    │ Perform inspection for presence or absence of│
    │ ground fault (detect ground fault location if it│
    │ is determined that ground fault has occurred)│
    └─────────────────────────────────────┘
                              ┌S17  YES
            ╱  Ground fault found?  ╲───────────┐
            ╲                       ╱            │
                │ NO         ┌S20               │
    ┌─────────────────────────────────┐   ┌───────────────────────────┐
    │ Turn off PV switching switch that│   │                       ┌S18│
    │ corresponds to solar cell string │   │ Inform occurrence of ground fault│
    │ that has been inspected          │   └───────────────────────────┘
    └─────────────────────────────────┘                          ┌S19
                                        ┌───────────────────────────┐
                                        │ Turn off PV switching switch that corresponds│
                                        │ to solar cell string that has been inspected │
                              ┌S21      └───────────────────────────┘
   NO     ╱                        ╲
   ◄───────  All solar cell strings inspected? 
           ╲                        ╱
                │ YES         ┌S22
    ┌─────────────────────────────────────┐
    │ Switch electric power delivery path switching│
    │ switches that correspond to all solar cell strings│
    │ that have been inspected to PCS side │
    └─────────────────────────────────────┘

                    ( End )
```

# FIG. 3

FIG. 4

EP 3 282 578 A1

15

# FIG. 5

# FIG. 6

# FIG. 7

**INTERNATIONAL SEARCH REPORT**

| International application No. |
| --- |
| PCT/JP2016/053183 |

**A. CLASSIFICATION OF SUBJECT MATTER**

*H02S50/00(2014.01)i*

According to International Patent Classification (IPC) or to both national classification and IPC

**B. FIELDS SEARCHED**

Minimum documentation searched (classification system followed by classification symbols)

H02S50/00

Documentation searched other than minimum documentation to the extent that such documents are included in the fields searched

Jitsuyo Shinan Koho            1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2013-069974 A  (System JD Co., Ltd.), 18 April 2013 (18.04.2013), paragraphs [0018] to [0024]; fig. 1 to 4 (Family: none) | 1–6 |
| Y | JP 2013-065797 A  (Tokyo University of Science), 11 April 2013 (11.04.2013), paragraphs [0002] to [0019], [0025], [0046]; fig. 1 (Family: none) | 1–6 |

☐ Further documents are listed in the continuation of Box C.         ☐ See patent family annex.

| | |
| --- | --- |
| * Special categories of cited documents:<br>"A" document defining the general state of the art which is not considered    to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 31 March 2016 (31.03.16) | 12 April 2016 (12.04.16) |

| Name and mailing address of the ISA/ | Authorized officer |
| --- | --- |
| Japan Patent Office<br>3-4-3,Kasumigaseki,Chiyoda-ku,<br>Tokyo 100-8915,Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012119382 A